(19) Europäisches Patentamt
European Patent Office
Office européen des brevets

(11) **EP 4 484 897 B1**

(12) **EUROPÄISCHE PATENTSCHRIFT**

(45) Veröffentlichungstag und Bekanntmachung des Hinweises auf die Patenterteilung:
**06.08.2025   Patentblatt 2025/32**

(21) Anmeldenummer: **23181353.6**

(22) Anmeldetag: **26.06.2023**

(51) Internationale Patentklassifikation (IPC):
***G01D 5/20*** *(2006.01)*

(52) Gemeinsame Patentklassifikation (CPC):
**G01D 5/2053**

(54) **INDUKTIVE WINKELMESSEINRICHTUNG**

INDUCTIVE ANGLE MEASURING DEVICE

DISPOSITIF INDUCTIF DE MESURE D'ANGLE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**01.01.2025   Patentblatt 2025/01**

(73) Patentinhaber: **Dr. Johannes Heidenhain GmbH
83301 Traunreut (DE)**

(72) Erfinder:
• **HEUMANN, Martin
  83278 Traunstein (DE)**
• **TIEMANN, Marc Oliver
  83329 Waging am See (DE)**
• **SELL, Oliver-Michael
  83301 Traunreut (DE)**

(56) Entgegenhaltungen:
DE-A1- 102020 205 202     DE-A1- 102021 205 036
DE-A1- 102021 210 279     DE-A1- 102021 210 910

# Beschreibung

## GEBIET DER TECHNIK

Die Erfindung betrifft eine induktive Winkelmesseinrichtung gemäß dem Anspruch.

Induktive Winkelmesseinrichtungen werden zur Bestimmung einer Winkelposition von relativ zueinander drehbaren Maschinenteilen verwendet. Bei induktiven Positionsmesseinrichtungen sind häufig Erregerspuren und Empfängerspuren etwa in Form von Leiterbahnen auf einer gemeinsamen meist mehrlagigen Leiterplatte aufgebracht, die beispielsweise mit einem Stator der Positionsmesseinrichtung fest verbunden ist. Dieser Leiterplatte gegenüber befindet sich ein Skalenelement, auf dem Teilungsstrukturen aufgebracht sind, und welches mit einem beweglichen Teil der Positionsmesseinrichtung fest verbunden ist. Wenn an den Erregerspuren ein zeitlich wechselnder elektrischer Erregerstrom angelegt wird, werden in den Empfängerspuren während der Relativbewegung zwischen dem Skalenelement und dem Abtastelement von der Position abhängige Signale erzeugt. Diese Signale werden dann in einer Auswerteelektronik weiterverarbeitet.

## STAND DER TECHNIK

Aus der EP 1 715 298 B1 ist ein induktives Winkelmessgerät bekannt, welches eine innere Teilungsspur und eine äußere Teilungsspur aufweist, die unterschiedliche Anzahlen von Signalperioden haben, so dass im Zusammenwirken mit einem zugehörigen Abtastelement eine absolute Bestimmung einer Winkellage ermöglicht ist.

In der DE 10 2020 205 202 A1 wird eine induktive Winkelmesseinrichtung beschrieben, die ein Skalenelement und zwei Empfängerspuren aufweist.

## ZUSAMMENFASSUNG DER ERFINDUNG

Der Erfindung liegt die Aufgabe zugrunde ein vergleichsweise genau arbeitendes, kompaktes und kostengünstig herstellbares Abtastelement für eine induktive Winkelmesseinrichtung zu schaffen.

Diese Aufgabe wird erfindungsgemäß durch die Merkmale des Anspruches 1 gelöst.

Demnach umfasst die induktive Winkelmesseinrichtung ein Abtastelement und ein relativ zum Abtastelement um eine Achse drehbares Skalenelement. Das Skalenelement weist eine erste Teilungsspur mit ersten Teilungsstrukturen, die entlang einer Umfangsrichtung um die Achse periodisch angeordnet sind, und eine zweite Teilungsspur mit zweiten Teilungsstrukturen, die ebenfalls entlang der Umfangsrichtung periodisch angeordnet sind, auf. Das Abtastelement weist eine Erregerspur und eine erste Empfängerspur sowie eine zweite Empfängerspur auf. Die erste Empfängerspur umfasst eine erste Empfängerleiterbahn und eine zweite Empfängerleiterbahn. Die erste und die zweite Empfängerleiterbahn verlaufen entlang einer ersten Kreislinie mit einem ersten Radius periodisch, insbesondere mit einer konstanten ersten Periodenlänge. Die erste und die zweite Empfängerleiterbahn sind zueinander versetzt in Umfangsrichtung angeordnet, so dass durch die erste Empfängerleiterbahn ein erstes Signal erzeugbar ist und durch die zweite Empfängerleiterbahn ein zweites Signal erzeugbar ist. Das erste Signal und das zweite Signal weisen einen ersten Phasenversatz zueinander auf. Die zweite Empfängerspur umfasst eine fünfte Empfängerleiterbahn, eine sechste Empfängerleiterbahn, eine siebte Empfängerleiterbahn und eine achte Empfängerleiterbahn. Die fünfte, sechste, siebte und achte Empfängerleiterbahn verlaufen jeweils entlang einer zweiten Kreislinie mit einem zweiten Radius periodisch, insbesondere mit einer konstanten zweiten Periodenlänge. Die fünfte, sechste, siebte und achte Empfängerleiterbahn verlaufen entlang der Umfangsrichtung und sind jeweils versetzt in Umfangsrichtung zueinander angeordnet. Die fünfte und die sechste Empfängerleiterbahn sind seriell miteinander verschaltet, so dass durch die fünfte und die sechste Empfängerleiterbahn ein erstes Gesamtsignal erzeugbar ist. Die siebte und die achte Empfängerleiterbahn sind ebenfalls seriell miteinander verschaltet, so dass durch die siebte und die achte Empfängerleiterbahn ein zweites Gesamtsignal erzeugbar ist. Das erste Gesamtsignal und das zweite Gesamtsignal weisen einen zweiten Phasenversatz zueinander auf.

Das Abtastelement dient in einer Winkelmesseinrichtung dazu eine Winkelstellung relativ zu einem Skalenelement zu bestimmen, wobei das Skalenelement relativ zum Abtastelement um die Achse drehbar angeordnet ist, so dass die Messrichtung die Umfangsrichtung bezogen auf die Achse darstellt.

Mit Vorteil ist die zweite Periodenlänge größer als die erste Periodenlänge. Die zweite Empfängerspur liefert daher vergleichsweise weniger hoch aufgelöste Winkellageninformationen und wird daher häufig als Grobspur bezeichnet. Entsprechend kann die erste Empfängerspur auch als Feinspur bezeichnet werden, weil durch diese die höher aufgelösten Winkellageninformationen erzeugt werden.

In weiterer Ausgestaltung der Erfindung beträgt der erste Phasenversatz PH1 ein Viertel der ersten konstanten Periodenlänge $\lambda 1$ (PH1 = 1/4·$\lambda 1$). Gleichermaßen kann der zweite Phasenversatz PH2 ein Viertel der zweiten konstanten Periodenlänge $\lambda 2$ betragen (PH2 = 1/4·$\lambda 2$). Die Periodenlängen $\lambda 1$, $\lambda 2$ werden hier in Grad oder im Bogenmaß angegeben und beziehen sich auf einen Zentriwinkel um die Achse A. Der erste Phasenversatz PH1 und der zweite Phasenversatz PH2 sind demnach auf die zugehörige Periodenlänge $\lambda 1$, $\lambda 2$ bezogen und können daher als ein Bruchteil der betreffenden Periodenlänge $\lambda 1$, $\lambda 2$ ausgedrückt werden.

In weiterer Ausgestaltung der Erfindung weist die erste Empfängerspur eine erste Anzahl n1 an Empfängerleiterbahnen auf und die zweite Empfängerspur weist eine zweite Anzahl n2 an Empfängerleiterbahnen auf. Dabei gilt, dass die erste Anzahl n1 kleiner ist als die zweite Anzahl n2 (n1 < n2).

Vorteilhafterweise ist die zweite Anzahl n2 mindestens doppelt so groß wie die erste Anzahl n1 (n2 $\geq$ 2·n1), insbesondere genau doppelt so groß wie die erste Anzahl n1 (n2 = 2·n1).

Mit Vorteil ist der zweite Radius R2 kleiner als der erste Radius R1 (R2 < R1).

In weiterer Ausgestaltung der Erfindung umfasst das Abtastelement eine erste Erregerspur und eine zweite Erregerspur, wobei die erste Empfängerspur radial außen von der ersten Erregerspur umgeben ist und radial innen von der zweiten Erregerspur umgeben ist. Dagegen ist die zweite Empfängerspur nur einseitig von der zweiten Erregerspur umgeben.

Vorteilhafterweise ist das Abtastelement so ausgestaltet, dass die fünfte und die sechste Empfängerleiterbahn periodisch mit einer konstanten zweiten Periodenlänge λ2 verlaufen und zudem entlang der Umfangsrichtung um einen Winkelversatz φ2 zueinander versetzt angeordnet sind, wobei der Winkelversatz φ2 maximal 1/16 der zweiten Periodenlänge beträgt (φ2 $\leq$ 1/16·λ2).

Mit Vorteil verlaufen die siebte und die achte Empfängerleiterbahn periodisch mit einer konstanten zweiten Periodenlänge λ2 und sind entlang der Umfangsrichtung um einen Winkelversatz φ2 zueinander versetzt angeordnet. Auch der Winkelversatz φ2 zwischen der siebten und der achten Empfängerleiterbahn beträgt vorteilhafterweise maximal 1/16 der zweiten Periodenlänge λ2, so dass gilt: φ2 $\leq$ 1/16·λ2.

In weiterer Ausgestaltung der Erfindung ist das Abtastelement als eine Leiterplatte ausgestaltet, wobei die Erregerspur, die erste Empfängerspur sowie die zweite Empfängerspur in weniger als vier elektrisch leitfähigen Lagen verlaufen, also in weniger als vier Ebenen. Die elektrisch leitfähigen Lagen sind so strukturiert, dass aus diesen die Empfängerleiterbahnen gebildet werden. Zudem werden Erregerleitungen der Erregerspuren durch Strukturierung der elektrisch leitfähigen Lagen erzeugt. Insbesondere kann das Abtastelement als eine Leiterplatte ausgestaltet sein, bei der die Erregerspur, die erste Empfängerspur sowie die zweite Empfängerspur in genau zwei elektrisch leitfähigen Lagen verlaufen.

Mit Vorteil ist das Abtastelement so ausgestaltet, dass sich die erste Empfängerspur und / oder die zweite Empfängerspur um die Achse herum über den gesamten Umfang hinweg erstrecken. Das heißt, dass über 360° hinweg immer zumindest eine der Empfängerleiterbahnen der betreffenden Empfängerspur vorhanden ist, so dass demnach jede beliebige radiale Linie, die von einem auf der Achse liegenden Mittelpunkt ausgeht, zumindest eine Empfängerleiterbahn schneidet. Somit weist die erste Empfängerspur und / oder die zweite Empfängerspur über den gesamten Umfang hinweg keine Lücke auf.

Vorteilhafte Ausbildungen der Erfindung entnimmt man den abhängigen Ansprüchen.

Weitere Einzelheiten und Vorteile des erfindungsgemäßen Abtastelements ergeben sich aus der nachfolgenden Beschreibung eines Ausführungsbeispiels anhand der beiliegenden Figuren.

## KURZE BESCHREIBUNG DER ZEICHNUNGEN

Figur 1    eine perspektivische Ansicht einer Winkelmesseinrichtung umfassend ein Abtastelement und ein Skalenelement,

Figur 2    eine Draufsicht auf das Skalenelement,

Figur 3    eine Draufsicht auf eine Seite des Abtastelements,

Figur 4    eine Draufsicht auf einen Teil des Abtastelements,

Figur 5    eine Draufsicht auf einen Teil des Abtastelements, wobei unter anderem mehrere Empfängerleiterbahnen ausgeblendet sind,

Figur 6    eine schematische Ansicht von Empfängerleiterbahnen einer ersten Empfängerspur in abgewickelter Darstellung,

Figur 7    eine schematische Ansicht von Empfängerleiterbahnen einer zweiten Empfängerspur in abgewickelter Darstellung,

Figur 8    Signale von Empfängerleiterbahnen der ersten Empfängerspur,

Figur 9    Signale von Empfängerleiterbahnen der zweiten Empfängerspur.

## BESCHREIBUNG DER AUSFÜHRUNGSFORMEN

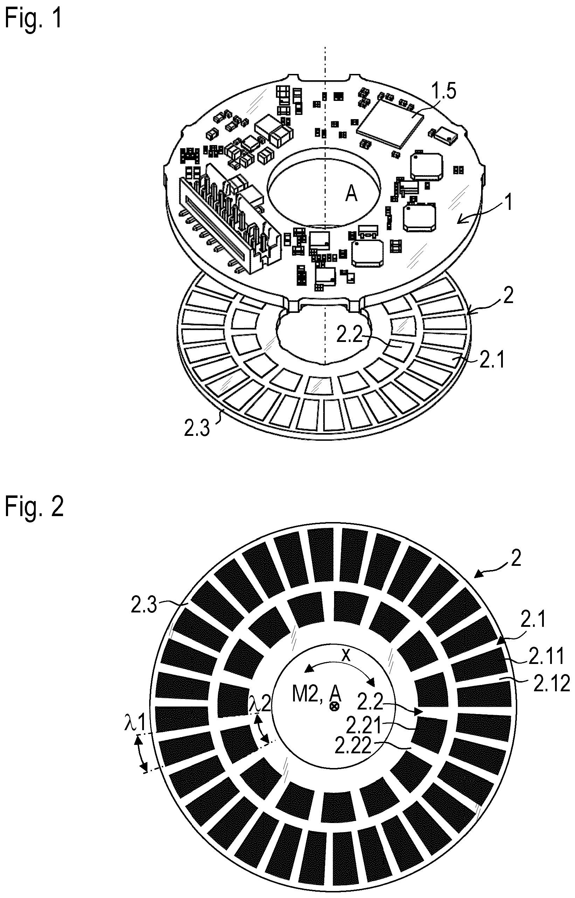

Die Winkelmesseinrichtung des hier vorgestellten Ausführungsbeispiels weist gemäß der Figur 1 ein Abtastelement 1 auf, das zur Erfassung einer Winkelstellung eines Skalenelements 2 dient. Das Skalenelement 2 ist um eine Achse A relativ zum Abtastelement 1 drehbar angeordnet. Eine derartige Winkelmesseinrichtung kann beispielsweise in einer Antriebseinrichtung verwendet werden, wobei das Skalenelement 2 dann etwa mit einer Antriebswelle eines Motors drehfest verbunden wird.

In der Figur 2 ist das Skalenelement 2 in einer Draufsicht gezeigt. Das Skalenelement 2 weist eine ringförmige beziehungsweise kreisringförmige Gestalt auf. Das Skalenelement 2 besteht aus einem Substrat 2.3, welches im dargestellten Ausführungsbeispiel aus Epoxidharz hergestellt ist und auf dem zwei Teilungsspuren 2.1, 2.2 angeordnet sind. Die Teilungsspuren 2.1, 2.2 sind ringförmig ausgebildet und bezüglich der Achse A beziehungsweise einem auf der Achse A liegenden Skalenmittelpunkt M2 konzentrisch mit unterschiedlichen Radien auf dem Substrat 2.3 angeordnet, so dass die erste Teilungsspur 2.1 entlang einer ersten Teilungskreislinie verläuft und die zweite Teilungsspur 2.2 entlang einer zweiten Teilungskreislinie verläuft. Die Teilungsspuren 2.1, 2.2 umfassen Teilungsstrukturen bestehend aus jeweils einer periodischen Abfolge von entlang der Umfangsrichtung x alternierend angeordneten elektrisch leitfähigen Teilungsbereichen 2.11, 2.21 und nichtleitfähigen Teilungsbereichen 2.12, 2.22, wobei die elektrisch leitfähigen Teilungsbereiche 2.11, 2.21, jeweils aus einer Schicht aus elektrisch leitfähigem Material gebildet sind. Als Material für die elektrisch leitfähigen Teilungsbereiche 2.11, 2.21 wurde im gezeigten Beispiel Kupfer auf das Substrat 2.3 aufgebracht. In den nichtleitfähigen Teilungsbereichen 2.12, 2.22 ist das Substrat 2.3 dagegen nicht beschichtet. Im Gegensatz zur Figur 1 sind in der Figur 2 die elektrisch leitfähigen Teilungsbereiche 2.11, 2.21 schwarz ausgefüllt dargestellt.

Durch die Anordnung mit jeweils zwei Teilungsspuren 2.1, 2.2 kann die Winkelstellung des Skalenelements 2 absolut bestimmt werden. Die äußere erste Teilungsspur 2.1 des Skalenelements 2 weist die größere Anzahl von jeweiligen Teilungsbereichen 2.11, 2.12 entlang der Umfangsrichtung x auf, so dass durch diese die größere Auflösung bezüglich der Messung der Winkelstellung erzielbar ist. Im vorgestellten Ausführungsbeispiel weist die erste (äußere) Teilungsspur 2.1 eine Anzahl von 32 jeweiligen Teilungsbereichen 2.11, 2.12 entlang der Umfangsrichtung x auf. Die erste Teilungsspur 2.1 weist demnach eine erste Periodenlänge $\lambda 1$ von $360°/32 = 11,25°$ auf.

Die zweite (innere) Teilungsspur 2.2 weist dagegen nur 15 jeweilige Teilungsbereiche 2.21, 2.22 auf, so dass die zweite Teilungsspur 2.2 eine zweite Periodenlänge $\lambda 2$ von $360°/15 = 24°$ aufweist.

Die Periodenlängen $\lambda 1$, $\lambda 2$ werden hier in Grad angegeben und beziehen sich auf einen Zentriwinkel um die Achse A beziehungsweise um den Skalenmittelpunkt M2.

Das Abtastelement 1 ist als eine Leiterplatte ausgestaltet, welche mehrere Lagen aufweist, sowie elektronische Bauteile 1.5, die auf dem Abtastelement 1 montiert sind.

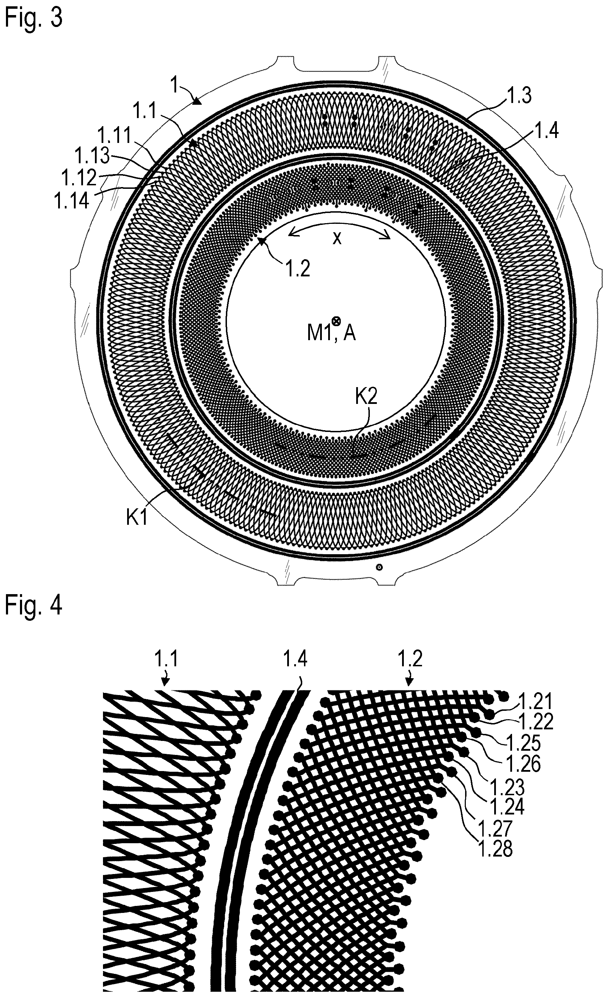

Wie auch in der Figur 3 gezeigt, hat das Abtastelement 1 die Form eines Kreisrings. Im vorgestellten Ausführungsbeispiel sind die elektronischen Bauteile 1.5 nur auf einer Seite der Leiterplatte montiert, nämlich auf der vom Skalenelement 2 abgewandten Seite. Alternativ oder ergänzend könnten aber auch beide Seiten der Leiterplatte mit elektronischen Bauteilen 1.5 bestückt werden.

Zur Bestimmung der Winkelinformationen weist gemäß der Figur 3 das Abtastelement 1 eine erste Empfängerspur 1.1, und eine zweite Empfängerspur 1.2 auf. Die Empfängerspuren 1.1, 1.2 haben jeweils eine Ringform, wobei für beide Empfängerspuren 1.1, 1.2 gilt, dass deren Mittelpunkt M1 auf der Achse A liegt. Demnach sind die Empfängerspuren 1.1, 1.2 bezüglich des Mittelpunkts M1 in erster Näherung konzentrisch angeordnet.

Die erste Empfängerspur 1.1 umfasst im vorgestellten Ausführungsbeispiel eine erste Empfängerleiterbahn 1.11, eine zweite Empfängerleiterbahn 1.12, eine dritte Empfängerleiterbahn 1.13 und eine vierte Empfängerleiterbahn 1.14. Somit weist die erste Empfängerspur 1.1 eine erste Anzahl $n1 = 4$ an Empfängerleiterbahnen 1.11, 1.12, 1.13, 1.14 auf.

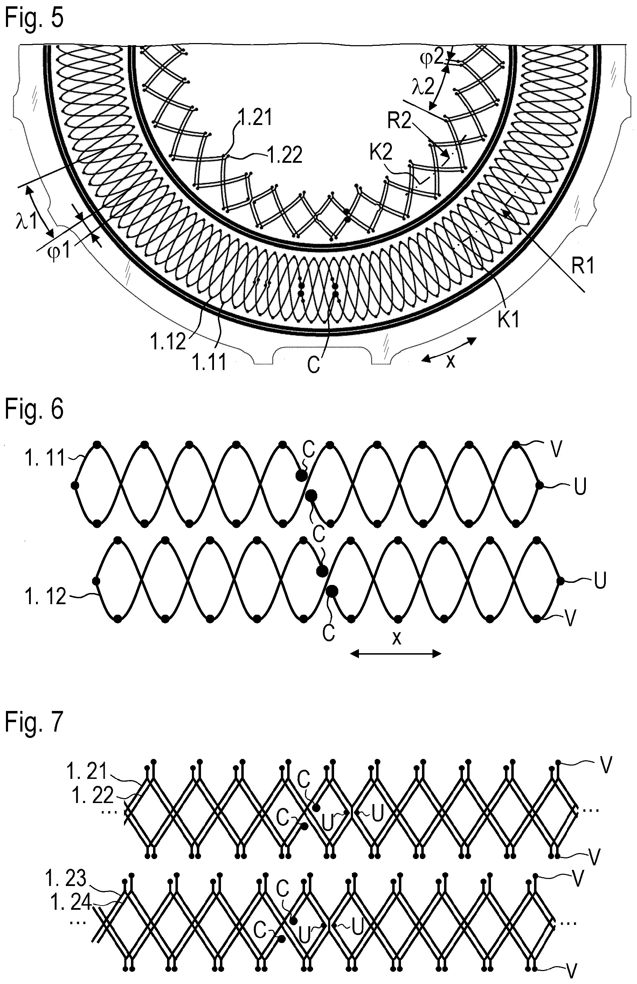

Die Empfängerleiterbahnen 1.11, 1.12, 1.13, 1.14 der ersten Empfängerspur 1.1 sind in Umfangsrichtung x versetzt zueinander angeordnet, wobei die Empfängerleiterbahnen 1.11, 1.12, 1.13, 1.14 entlang einer ersten Kreislinie K1, die einen ersten Radius R1 (Figur 5) aufweist, verlaufen. Die Empfängerleiterbahnen 1.11, 1.12, 1.13, 1.14 der ersten Empfängerspur 1.1 weisen einen räumlich periodischen Verlauf auf, der im Wesentlichen sinusförmig beziehungsweise sinusartig ausgestaltet ist. Die Empfängerleiterbahnen 1.11, 1.12, 1.13, 1.14 der ersten Empfängerspur 1.1 weisen zudem über ihren Verlauf hinweg die konstante erste Periodenlänge $\lambda 1 = 11,25°$, wie sie auch in der ersten Teilungsspur 2.1 zu finden ist, auf (Figur 5). Die erste Periodenlänge $\lambda 1$ erstreckt sich also über einen Zentriwinkel von 11,25° um den Mittelpunkt M1.

In der Figur 5 sind im Hinblick auf die erste Empfängerspur 1.1 nur die erste Empfängerleiterbahn 1.11 und die zweite Empfängerleiterbahn 1.12 dargestellt. Die jeweils dazwischen angeordnete dritte Empfängerleiterbahn 1.13 und die vierte Empfängerleiterbahn 1.14 wurden der Übersichtlichkeit halber ausgeblendet. Die folgenden Erläuterungen werden anhand dieser Darstellung der ersten Empfängerleiterbahn 1.11 und der zweiten Empfängerleiterbahn 1.12 vorgenommen, wobei die Gegebenheiten auch für die entsprechend zueinander gehörigen phasenverschobenen dritten und vierten Empfängerleiterbahnen 1.13, 1.14 zutreffen. Im vorgestellten Ausführungsbeispiel sind die erste Empfängerleiterbahn 1.11 und die zweite Empfängerleiterbahn 1.12 entlang der Umfangsrichtung x um einen ersten Winkelversatz $\varphi 1$, der hier 1/4 der vollen ersten Periodenlänge $\lambda 1$ entspricht, zueinander versetzt angeordnet. Innerhalb der ersten Empfängerspur 1.1 sind folglich unmittelbar benachbarte Empfängerleiterbahnen 1.11, 1.12, 1.13, 1.14 entlang der Umfangsrichtung x um die Hälfte des ersten Winkelversatzes $\varphi 1$ versetzt angeordnet.

Es gilt $\varphi 1 = 1/4 \cdot \lambda 1$, so dass der erste Winkelversatz $\varphi 1$ im vorgestellten Ausführungsbeispiel $1/4 \cdot 11,25° = 2,81°$ beträgt.

Die zweite Empfängerspur 1.2 umfasst im vorgestellten Ausführungsbeispiel gemäß der Figur 4 eine fünfte Empfängerleiterbahn 1.21, eine sechste Empfängerleiterbahn 1.22, eine siebte Empfängerleiterbahn 1.23, eine achte Empfängerleiterbahn 1.24, eine neunte Empfängerleiterbahn 1.25, eine zehnte Empfängerleiterbahn 1.26, eine elfte Empfängerleiterbahn 1.27 und eine zwölfte Empfängerleiterbahn 1.28. Folglich weist die erste Empfängerspur 1.1 eine zweite Anzahl n2 = 8 an Empfängerleiterbahnen 1.21 bis 1.28 auf. Auch die Empfängerleiterbahnen 1.21 bis 1.28 der zweiten Empfängerspur 1.2 sind in Umfangsrichtung x versetzt relativ zueinander angeordnet. Sie verlaufen entlang einer zweiten Kreislinie K2 (Figur 5), die einen zweiten Radius R2 aufweist. Die Empfängerleiterbahnen 1.21 bis 1.28 der zweiten Empfängerspur 1.2 weisen über ihren Verlauf hinweg eine konstante zweite Periodenlänge $\lambda 2$ auf, wobei der Verlauf hier von einer idealen Sinusform abweicht. Die Empfängerleiterbahnen 1.21 bis 1.28 der zweiten Empfängerspur 1.2 weisen auch einen periodischen Verlauf auf. Im vorgestellten Ausführungsbeispiel ist die zweite Periodenlänge $\lambda 2 = 360°/15 = 24°$.

Demnach ist hier die zweite Periodenlänge $\lambda 2$ größer als die erste Periodenlänge $\lambda 1$.

$$\lambda 2 > \lambda 1$$

Die Empfängerleiterbahnen 1.21 bis 1.28 der zweiten Empfängerspur 1.2 verlaufen entlang einer zweiten Kreislinie K2, die einen zweiten Radius R2 aufweist, wobei der zweite Radius R2 kleiner ist als der erste Radius R1, so dass gilt:

$$R2 < R1$$

Beide Kreislinien K1, K2 haben denselben Mittelpunkt M1.

Zudem ist die erste Anzahl n1 = 4 an Empfängerleiterbahnen 1.11, 1.12, 1.13, 1.14 der ersten Empfängerspur 1.1 kleiner als die zweite Anzahl n2 =8 der Empfängerleiterbahnen 1.21 bis 1.28 der zweiten Empfängerspur 1.2:

$$n1 < n2$$

Im vorgestellten Ausführungsbeispiel gilt folglich auch, dass die zweite Anzahl n2 doppelt so groß ist wie die erste Anzahl n1.

$$n2 = 2 \cdot n1$$

In der Figur 5 sind für die zweite Empfängerspur 1.2 nur die fünfte Empfängerleiterbahn 1.21 und die sechste Empfängerleiterbahn 1.22 dargestellt. Die folgenden Erläuterungen werden anhand dieser Darstellung der fünften Empfängerleiterbahn 1.21 und der sechsten Empfängerleiterbahn 1.22 vorgenommen, wobei die Gegebenheiten auch für die entsprechend zueinander gehörigen phasenverschobenen Empfängerleiterbahnen 1.23, 1.24, 1.25, 1.26, 1.27, 1.28 zutreffen. Im vorgestellten Ausführungsbeispiel sind innerhalb der zweiten Empfängerspur 1.2 benachbarte Empfängerleiterbahnen 1.21 bis 1.28 um einen zweiten Winkelversatz

$\varphi 2$, der 1/16 der vollen zweiten Periodenlänge $\lambda 2$ entspricht, entlang der Umfangsrichtung x zueinander versetzt angeordnet. ($\varphi 2 = 24°/16 = 1,5°$). Bei der zweiten Empfängerspur 1.2 sind jeweils zwei zueinander benachbarte Empfängerleiterbahnen 1.21 bis 1.28 seriell miteinander verschaltet. Insbesondere sind die fünfte und die sechste Empfängerleiterbahn 1.21, 1.22 seriell miteinander verschaltet ebenso wie die siebte und die achte Empfängerleiterbahn 1.23, 1.24, die neunte und die zehnte Empfängerleiterbahn 1.25, 1.26 sowie die elfte und die zwölfte Empfängerleiterbahn 1.27, 1.28.

Außerdem umfasst das Abtastelement 1 eine erste Erregerspur 1.3 und eine zweite Erregerspur 1.4. Die Erregerspuren 1.3, 1.4 umfassen im vorgestellten Ausführungsbeispiel mehrere Erregerleitungen, können aber auch nur als jeweils eine Erregerleitung ausgebildet sein. Die erste Empfängerspur 1.1 verläuft radial innerhalb der ersten Erregerspur 1.3 und radial außerhalb der zweiten Erregerspur 1.4. Die zweite Erregerspur 1.4 verläuft zudem radial außerhalb der zweiten Empfängerspur 1.2. Sowohl die Erregerspuren 1.3, 1.4 als auch die Empfängerspuren 1.1, 1.2 verlaufen entlang der Umfangsrichtung x.

Die Empfängerleiterbahnen 1.11, 1.12, 1.13, 1.14 der ersten Empfängerspur 1.1, wie auch die Empfängerleiterbahnen 1.21 bis 1.28 der zweiten Empfängerspur 1.2, verlaufen mit Vias V (Figuren 6 und 7) verbunden in unterschiedlichen Lagen der Leiterplatte, so dass an Kreuzungspunkten unerwünschte Kurzschlüsse vermieden werden. Wenngleich genau genommen jede der Empfängerleiterbahnen 1.11 bis 1.14; 1.21 bis 1.28 aus vielen Leiterstücken besteht, die jeweils auf zwei Ebenen beziehungsweise Lagen verteilt und aneinandergereiht sind, wird hier eine derartige Struktur zusammenfassend als eine Empfängerleiterbahn 1.11 bis 1.14, 1.21 bis 1.28 bezeichnet.

In der Figur 6 ist schematisch der Verlauf der ersten und der zweiten Empfängerleiterbahnen 1.11, 1.12 gezeigt, wobei der Übersichtlichkeit halber die tatsächlich umlaufenden ersten und zweiten Empfängerleiterbahnen 1.11, 1.12 gestreckt dargestellt sind. Zudem sind in der Figur 6 die an sich übereinander liegenden ersten und zweiten Empfängerleiterbahnen 1.11, 1.12 verkürzt und versetzt zueinander dargestellt um den jeweiligen Verlauf der Empfängerleiterbahnen 1.11, 1.12 übersichtlicher zu zeigen. Dementsprechend ist hier die Umfangsrichtung x, also die Messrichtung, linear dargestellt. Wie bereits oben beschrieben, weisen die ersten und zweiten Empfängerleiterbahnen 1.11, 1.12 jeweils einen sinusförmigen Verlauf auf. Die in der Figur 6 dargestellten Enden sind an den Punkten U miteinander elektrisch verbunden.

In der Figur 7 sind die fünfte und die sechste Empfängerleiterbahn 1.21, 1.22 sowie die siebte und die achte Empfängerleiterbahn 1.23, 1.24 schematisch linear gestreckt separat dargestellt. Die vereinfachte Darstellung der Figur 7 ist so zu verstehen, dass die linken und rechten Enden der Empfängerleiterbahnen 1.21, 1.22, 1.23, 1.24 wieder zusammengeführt werden, so dass also auch dort jeweils eine geschlossene Leitung vorliegt, wobei die fünfte und die sechste Empfängerleiterbahn 1.21, 1.22 seriell miteinander verschaltet sind wie auch die siebte und die achte Empfängerleiterbahn 1.23, 1.24. Dementsprechend sind die in der Figur 7 dargestellten Enden U der zusammengehörigen Empfängerleiterbahn 1.21, 1.22, 1.23, 1.24 an den Punkten U miteinander elektrisch verbunden. In der Figur 6 zwischen den Punkten U verlaufen die Empfängerleiterbahn 1.21, 1.22, 1.23, 1.24 in zwei Ebenen übereinander, und zwar von links oben nach rechts unten beziehungsweise von rechts oben nach links unten. Die Empfängerleiterbahnen 1.21, 1.22, 1.23, 1.24 weisen in der Darstellungsform der Figur 7 einen weitgehend geraden Verlauf auf, so dass diese jeweils eine rautenförmige Fläche umgeben. Durch diese geometrische Ausgestaltung kann eine relativ dichte beziehungsweise enge Anordnung der Empfängerleiterbahnen 1.21 bis 1.28 auf dem Substrat 1.3 erreicht werden. Werden die Empfängerleiterbahnen 1.21 bis 1.28 der realen Anordnung entsprechend gebogen, weisen die Empfängerleiterbahnen 1.21 bis 1.28 der zweiten Empfängerspur 1.2 zwischen den Umkehrpunkten einen gekrümmten Verlauf mit vergleichsweise großen Radien auf. Aus Platzgründen wurden die Vias V hier nach außen hin verlegt, wobei die radial innen liegenden Vias V jeweils in radialer Richtung versetzt angeordnet sind (siehe auch die Figuren 3 bis 5).

Im zusammengebauten Zustand stehen sich das Abtastelement 1 und das Skalenelement 2 mit axialem Abstand beziehungsweise Luftspalt gegenüber, so dass bei einer Relativdrehung zwischen dem Skalenelement 2 und dem Abtastelement 1 in den Empfängerleiterbahnen 1.11 bis 1.14, 1.21 bis 1.28 jeweils ein von der jeweiligen Winkelposition abhängiges Signal durch Induktionseffekte erzeugbar ist. Voraussetzung für die Bildung von entsprechenden Signalen ist, dass die Erregerspuren 1.3, 1.4 ein zeitlich wechselndes elektromagnetisches Erregerfeld im Bereich der jeweilig abgetasteten Teilungsstrukturen erzeugen. Im dargestellten Ausführungsbeispiel sind die Erregerspuren 1.3, 1.4 als mehrere planar-parallele stromdurchflossene Einzel-Leiterbahnen ausgebildet.

Werden die Erregerspuren 1.3, 1.4 bestromt, so bildet sich um die Erregerspuren 1.3, 1.4 ein schlauch- bzw. zylinderförmig orientiertes elektromagnetisches Feld aus. Die Feldlinien des resultierenden elektromagnetischen Feldes verlaufen um die Erregerspuren 1.3, 1.4, wobei die Richtung der Feldlinien in bekannter Art und Weise von der Stromrichtung in den Erregerspuren 1.3, 1.4 abhängt. Im Bereich der elektrisch leitfähigen Teilungsbereiche 2.11, 2.21 werden Wirbelströme induziert, so dass jeweils eine von der Winkelstellung abhängige Modulation des Feldes erreicht wird. Entsprechend kann durch die Empfängerspuren 1.1, 1.2 jeweils die relative Winkelstellung gemessen werden.

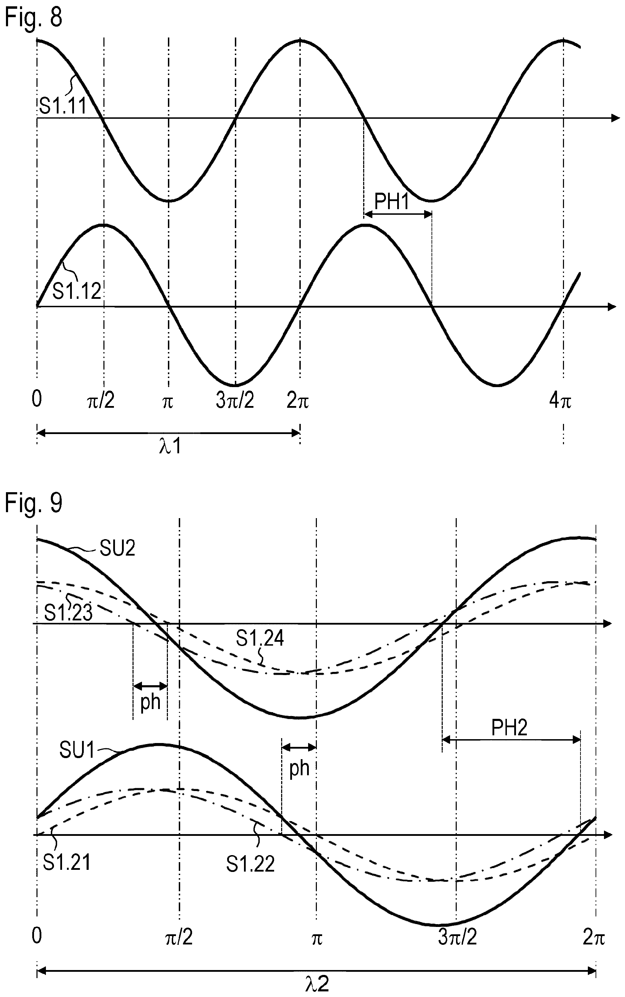

Insbesondere können an Kontaktpunkten C, siehe etwa die Figur 6, von der ersten Empfängerleiterbahn 1.11 erzeugte beziehungsweise empfangene erste Signale S1.11 abgegriffen werden sowie durch die zweite Empfängerleiterbahn 1.12 erzeugte beziehungsweise empfangene zweite Signale S1.12. Der Verlauf beziehungsweise die Einhüllenden der ersten Signale S1.11 und der zweiten Signale S1.12 ist in der Figur 8 in Abhängigkeit von der jeweiligen Winkelstellung zwischen dem Abtastelement 1 und dem Skalenelement 2 gezeigt. Das erste Signal S1.11 und das zweite Signal S1.12 weisen einen ersten Phasenversatz PH1 zueinander auf, der im vorgestellten Ausführungsbeispiel $\pi/2$ beträgt, wobei die volle Periode des ersten Signals S1.11 und des zweiten Signals S1.12 definitionsgemäß $2\pi$ beträgt. Die erste Empfängerleiterbahn 1.11 und die zweite Empfängerleiterbahn 1.12 liefern also 0° und 90°-Signale.

Die Periode des ersten Signals S1.11 und des zweiten Signals S1.12 resultiert aus der geometrischen Ausgestaltung der ersten Empfängerleiterbahn 1.11 und der zweiten Empfängerleiterbahn 1.12 in Verbindung mit der Geometrie der ersten Teilungsspur 2.1. Die erste Empfängerleiterbahn 1.11 und die zweite Empfängerleiterbahn 1.12 weisen gemäß der Figur 5 die geometrische erste Periodenlänge $\lambda 1$ auf und sind in Umfangsrichtung x mit dem Winkelversatz $\varphi 1$ (= $1/4 \cdot \lambda 1$) zueinander angeordnet. Dementsprechend weisen das erste Signal S1.11 und das zweite Signal S1.12 eine Periode auf, die der ersten Periodenlänge $\lambda 1$ entspricht. Weiterhin kann der Betrag des ersten Phasenversatzes PH1 auch als $1/4 \cdot \lambda 1$ ausgedrückt werden:

$$PH1 = 1/4 \cdot \lambda 1.$$

Die dritte Empfängerleiterbahn 1.13 und die vierte Empfängerleiterbahn 1.14 sind gegenüber der ersten Empfängerleiterbahn 1.11 und der zweiten Empfängerleiterbahn 1.12 versetzt angeordnet, so dass die dritte Empfängerleiterbahn 1.13 dritte Signale liefert, die gegenüber den ersten Signalen S1.11 der ersten Empfängerleiterbahn 1.11 um $\pi/4$ phasenverschoben sind. Analog sind vierte Signale der vierten Empfängerleiterbahn 1.14 um $\pi/4$ phasenverschoben zu den zweiten Signalen S1.12. Die dritten und vierten Signale dienen zur redundanten Positionswertgewinnung, insbesondere für sicherheitsrelevante Anwendungen.

Die fünfte und die sechste Empfängerleiterbahn 1.21, 1.22 würden gemäß der Figur 9 jeweils für sich genommen ein fünftes Signal S1.21 und ein sechstes Signal S1.22 erzeugen. Das fünfte Signal S1.21 und das sechste Signal S1.22 weisen hier einen Phasenversatz ph von $\pi/8$ (22,5°) auf. Da die fünfte und die sechste Empfängerleiterbahn 1.21, 1.22 seriell miteinander verschaltet sind, wird durch diese ein erstes Gesamtsignal SU1 erzeugt.

Analog hierzu würden von der siebten Empfängerleiterbahn 1.23 und von der achten Empfängerleiterbahn 1.24 jeweils für sich genommen ein siebtes Signal S1.23 und ein achtes Signal S1.24 erzeugt werden. Das siebte und achte Signal S1.23, S1.24 weisen zueinander den gleichen Phasenversatz ph von $\pi/8$ auf wie das fünfte Signal S1.21 und das sechste Signal S1.22. Auch die siebte und die achte Empfängerleiterbahn 1.23, 1.24 sind seriell miteinander verschaltet. Im Ergebnis wird daher durch die siebte und die achte Empfängerleiterbahn 1.23, 1.24 ein zweites Gesamtsignal SU2 erzeugt.

Die Beträge des Phasenversatz ph von $\pi/8$ und des zweiten Phasenversatzes PH2 von $\pi/2$ sind im Kontext zur Definition zu verstehen, wonach eine volle Periode des fünften, sechsten, siebten und achten Signals S1.21, S1.22, S1.23, S1.24 sowie des zweiten Gesamtsignals SU2 $2\pi$ beträgt.

Das fünfte, sechste, siebte und achte Signal S1.21, S1.22, S1.23, S1.24 sowie das erste Gesamtsignal SU1 und das zweite Gesamtsignal SU2 weisen jeweils eine gleich große Periode mit der zweiten Periodenlänge $\lambda2$ auf. Diese resultiert aus der geometrischen Ausgestaltung der fünften Empfängerleiterbahn 1.21 und der sechsten Empfängerleiterbahn 1.22 in Verbindung mit der Geometrie der zweiten Teilungsspur 2.2. Diese Empfängerleiterbahnen 1.21, 1.22 weisen gemäß der Figur 5 die geometrische zweite Periodenlänge $\lambda2$ auf und sind in Umfangsrichtung x mit dem zweiten Winkelversatz $\varphi2$ (= $1/16 \cdot \lambda2$) zueinander angeordnet. Infolgedessen weisen das fünfte Signal S1.21 und das sechste Signal S1.22 eine Periode auf, die der zweiten Periodenlänge $\lambda2$ entspricht. Insofern kann die Größe des Phasenversatzes ph zwischen dem fünften Signal S1.21 und dem sechsten Signal S1.22 beziehungsweise zwischen dem siebten Signal S1.23 und dem achten Signal S1.24 auch als $1/16 \cdot \lambda2$ angegeben werden:

$$ph = 1/16 \cdot \lambda2$$

Weiterhin weisen das erste Gesamtsignal SU1 und das zweite Gesamtsignal SU2 einen zweiten Phasenversatz PH2 zueinander auf, der im vorgestellten Ausführungsbeispiel $\pi/2$ entspricht, wobei die volle Periode des ersten Gesamtsignals SU1 und des zweiten Gesamtsignals SU2 definitionsgemäß $2\pi$ beträgt. Demnach beträgt der zweite Phasenversatz PH2 $1/4 \cdot \lambda2$, also:

$$PH2 = 1/4 \cdot \lambda2.$$

Das erste Gesamtsignal SU1 und das zweite Gesamtsignal SU2 können also als 0° und 90°-Signale verwendet werden. Durch die neunte bis zwölfte Empfängerleiterbahnen 1.25 bis 1.28 kann eine weiteres Paar von um 90° zueinander verschobenen Gesamtsignalen gebildet werden (45° und 135°-Signale), so dass auch hier eine redundante Positionswerterfassung erfolgt.

Das Abtastelement 1 weist eine elektronische Schaltung mit den elektronischen Bauteilen 1.5 auf, die miteinander elektrisch verbunden sind. Die elektronische Schaltung kann beispielsweise auch einen ASIC-Baustein umfassen. Die Signale, die von den Empfängerspuren 1.1, 1.2 erzeugt werden, werden mit Hilfe von einigen der elektronischen Bauteile 1.5, die eine Ausschalt werteschaltung bilden, weiterverarbeitet. Insbesondere kann bei der vorliegenden Konfiguration mit den beiden Teilungspuren 2.1, 2.2 und den beiden Empfängerspuren 1.1, 1.2 durch den Auswerte-ASIC eine absolute Position errechnet werden. Diese elektronische Schaltung des Abtastelements 1 arbeitet nicht nur als Auswerteelement, sondern auch als Erregerkontrollelement, unter dessen Kontrolle der Erregerstrom generiert beziehungsweise erzeugt wird, welcher dann durch die Erregerspuren 1.3, 1.4 fließt. Somit werden die Erregerspuren 1.3, 1.4 durch ein und dasselbe Erregerkontrollelement bestromt.

Die erste Empfängerspur 1.1 ist radial außen von der ersten Erregerspur 1.3 umgeben und gleichzeitig radial innen von der zweiten Erregerspur 1.4 umgeben. Im Gegensatz dazu ist die zweite Empfängerspur 1.2 nur einseitig von der zweiten Erregerspur 1.4 umgeben. Durch das bezüglich der zweiten Empfängerspur 1.2 einseitige Aufprägen des Erregerfelds kann eine äußerst platzsparende Konfiguration des Abtastelements 1 erreicht werden. Dabei können durch die spezielle Ausgestaltung der Empfängerspuren 1.1, 1.2, insbesondere der zweiten Empfängerspur 1.2, ausreichend große erste Signale S1.11 und zweite Signale S1.12 erzeugt werden. Zudem betrifft das einseitige Aufprägen des Erregerfelds die zweite Empfängerspur 1.2, dessen zweite Periodenlänge $\lambda2$ größer als die erste Periodenlänge $\lambda1$ der ersten Empfängerspur 1.1, so dass das einseitige Aufprägen des Erregerfelds diejenige (zweite) Empfängerspur 1.2 betrifft, welche die gröbere Auflösung aufweist.

**Patentansprüche**

1. Induktive Winkelmesseinrichtung umfassend ein Abtastelement (1) und ein relativ zum Abtastelement (1) drehbares Skalenelement (2), wobei

das Skalenelement (2) eine erste Teilungsspur (2.1) mit ersten Teilungsstrukturen (2.11, 2.12), die periodisch angeordnet sind, und eine zweite Teilungsspur (2.2) mit zweiten Teilungsstrukturen (2.21, 2.22), die periodisch angeordnet sind aufweist, das Abtastelement (1) eine Erregerspur (1.3, 1.4) und eine erste Empfängerspur (1.1) sowie eine zweite Empfängerspur (1.2) aufweist, wobei

die erste Empfängerspur (1.1) eine erste Empfängerleiterbahn (1.11) und eine zweite Empfängerleiterbahn (1.12) umfasst, wobei die erste und die zweite Empfängerleiterbahn (1.11, 1.12) entlang einer ersten Kreislinie (K1) mit einem ersten Radius (R1) periodisch verlaufen, wobei die erste und die zweite Empfängerleiterbahn (1.11, 1.12) zueinander versetzt in Umfangsrichtung (x) angeordnet sind, so dass durch die erste Empfängerleiterbahn (1.11) ein erstes Signal (S1.11) erzeugbar ist und durch die zweite Empfängerleiterbahn (1.12) ein zweites Signal (S1.12) erzeugbar ist, wobei das erste Signal (S1.11) und das zweite Signal (S1.12) einen ersten Phasenversatz (PH1) zueinander aufweisen,

die zweite Empfängerspur (1.2) eine fünfte Empfängerleiterbahn (1.21), eine sechste Empfängerleiterbahn (1.22), eine siebte Empfängerleiterbahn (1.23) und eine achte Empfängerleiterbahn (1.24) umfasst, wobei die fünfte, sechste, siebte und achte Empfängerleiterbahn (1.21, 1.22, 1.23, 1.24) jeweils entlang einer zweiten Kreislinie (K2) mit einem zweiten Radius (R2) periodisch verlaufen und jeweils versetzt in Umfangsrichtung (x) zueinander angeordnet sind, **dadurch gekennzeichnet, dass**

die fünfte und die sechste Empfängerleiterbahn (1.21, 1.22) seriell miteinander verschaltet sind, so dass durch die fünfte und die sechste Empfängerleiterbahn (1.21, 1.22) ein erstes Gesamtsignal (SU1) erzeugbar ist, und

die siebte und die achte Empfängerleiterbahn (1.23, 1.24) ebenfalls seriell miteinander verschaltet sind, so dass durch die siebte und die achte Empfängerleiterbahn (1.23, 1.24) ein zweites Gesamtsignal (SU2) erzeugbar ist, wobei

das erste Gesamtsignal (SU1) und das zweite Gesamtsignal (SU2) einen zweiten Phasenversatz (PH2) zueinander aufweisen.

2. Induktive Winkelmesseinrichtung gemäß dem Anspruch 1, wobei die erste und die zweite Empfängerleiterbahn (1.11, 1.12) periodisch mit einer konstanten ersten Periodenlänge ($\lambda$1) verlaufen.

3. Induktive Winkelmesseinrichtung gemäß dem Anspruch 1 oder 2, wobei die fünfte, sechste, siebte und achte Empfängerleiterbahn (1.21, 1.22, 1.23, 1.24) periodisch mit einer konstanten zweiten Periodenlänge ($\lambda$2) verlaufen.

4. Induktive Winkelmesseinrichtung gemäß dem Anspruch 2 und 3, wobei die zweite Periodenlänge ($\lambda$2) größer ist als die erste Periodenlänge ($\lambda$1).

5. Induktive Winkelmesseinrichtung gemäß einem der vorhergehenden Ansprüche, wobei die erste und die zweite Empfängerleiterbahn (1.11, 1.12) periodisch mit einer konstanten ersten Periodenlänge ($\lambda$1) verlaufen, wobei der erste Phasenversatz (PH1) ein Viertel der ersten Periodenlänge ($\lambda$1) beträgt.

6. Induktive Winkelmesseinrichtung gemäß einem der vorhergehenden Ansprüche, wobei die fünfte, sechste, siebte und achte Empfängerleiterbahn (1.21, 1.22, 1.23, 1.24) periodisch mit einer konstanten zweiten Periodenlänge ($\lambda$2) verlaufen, wobei der zweite Phasenversatz (PH2) ein Viertel der zweiten Periodenlänge ($\lambda$2) beträgt.

7. Induktive Winkelmesseinrichtung gemäß einem der vorhergehenden Ansprüche, wobei die erste Empfängerspur (1.1) eine erste Anzahl n1 an Empfängerleiterbahnen (1.11, 1.12, 1.13, 1.14) und die zweite Empfängerspur (1.2) eine zweite Anzahl n2 an Empfängerleiterbahnen (1.21 bis 1.28) aufweisen, wobei n1 kleiner als n2 ist.

8. Induktive Winkelmesseinrichtung gemäß dem Anspruch 7, wobei die zweite Anzahl n2 mindestens doppelt so groß ist wie die erste Anzahl n1, also $n2 \geq 2 \cdot n1$.

9. Induktive Winkelmesseinrichtung gemäß einem der vorhergehenden Ansprüche, wobei der zweite Radius (R2) kleiner ist als der erste Radius (R1).

10. Induktive Winkelmesseinrichtung gemäß einem der vorhergehenden Ansprüche, wobei das Abtastelement (1) eine erste Erregerspur (1.3) und eine zweite Erregerspur (1.4) umfasst, wobei die erste Empfängerspur (1.1) radial außen von der ersten Erregerspur (1.3) und radial innen von der zweiten Erregerspur (1.4) umgeben ist, während die zweite Empfängerspur (1.2) nur einseitig von der zweiten Erregerspur (1.4) umgeben ist.

11. Induktive Winkelmesseinrichtung gemäß einem der vorhergehenden Ansprüche, wobei die fünfte und die sechste Empfängerleiterbahn (1.21, 1.22) periodisch mit einer konstanten zweiten Periodenlänge ($\lambda$2) verlaufen und entlang der Umfangsrichtung (x) um einen Winkelversatz ($\varphi$2) zueinander versetzt angeordnet sind, wobei, der Winkelversatz ($\varphi$2) maximal 1/16 der zweiten Periodenlänge $\lambda$2 beträgt, so dass gilt: $\varphi2 \leq 1/16 \cdot \lambda2$.

12. Induktive Winkelmesseinrichtung gemäß einem der vorhergehenden Ansprüche, wobei die siebte und die achte Empfängerleiterbahn (1.23, 1.24) periodisch mit einer konstanten zweiten Periodenlänge ($\lambda$2) verlaufen und entlang der Umfangsrichtung (x) um einen Winkelversatz ($\varphi$2) zueinander versetzt angeordnet sind, wobei, der Winkelversatz ($\varphi$2) maximal 1/16 der zweiten Periodenlänge $\lambda$2 beträgt, so dass gilt: $\varphi2 \leq 1/16 \cdot \lambda2$.

**13.** Induktive Winkelmesseinrichtung gemäß einem der vorhergehenden Ansprüche, wobei das Abtastelement (1) als eine Leiterplatte ausgestaltet ist und die Erregerspur (1.3, 1.4), die erste Empfängerspur (1.1) sowie die zweite Empfängerspur (1.2) in weniger als vier elektrisch leitfähigen Lagen verlaufen.

**14.** Induktive Winkelmesseinrichtung gemäß einem der vorhergehenden Ansprüche, wobei sich die erste Empfängerspur (1.1) und / oder die zweite Empfängerspur (1.2) über den gesamten Umfang hinweg erstrecken.

**15.** Induktive Winkelmesseinrichtung gemäß einem der vorhergehenden Ansprüche, wobei das Abtastelement (1) als eine Leiterplatte ausgestaltet ist und die Erregerspur (1.3, 1.4), die erste Empfängerspur (1.1) sowie die zweite Empfängerspur (1.2) in genau zwei elektrisch leitfähigen Lagen verlaufen.


**Claims**

**1.** Inductive angle measuring device comprising a sensing element (1) and a scale element (2) which is rotatable relative to the scanning element (1), wherein the scale element (2) has a first graduation track (2.1) having first graduation structures (2.11, 2.12) arranged periodically and a second graduation track (2.2) having second graduation structures (2.21, 2.22) arranged periodically,

the scanning element (1) has an excitation track (1.3, 1.4) and a first receiver track (1.1) and a second receiver track (1.2), wherein
the first receiver track (1.1) comprises a first receiver conductor track (1.11) and a second receiver conductor track (1.12), wherein the first and the second receiver conductor track (1.11, 1.12) run periodically along a first circular line (K1) with a first radius (R1), wherein the first and the second receiver conductor track (1.11, 1.12) are arranged offset from one another in the circumferential direction (x) so that a first signal (S1.11) can be generated by the first receiver conductor track (1.11) and a second signal (S1.12) can be generated by the second receiver conductor track (1.12), wherein the first signal (S1.11) and the second signal (S1.12) have a first phase offset (PH1) relative to one another, the second receiver track (1.2) comprises a fifth receiver conductor track (1.21), a sixth receiver conductor track (1.22), a seventh receiver conductor track (1.23) and an eighth receiver conductor track (1.24), wherein the fifth, sixth, seventh and eighth receiver conductor track (1.21, 1.22, 1.23, 1.24) each run periodically along a second circular line (K2) with a second radius (R2) and are each arranged offset from one another in the circumferential direction (x), **characterized in that**
the fifth and the sixth receiver conductor track (1.21, 1.22) are connected to one another in series so that a first overall signal (SU1) can be generated by the fifth and sixth receiver conductor track (1.21, 1.22), and
the seventh and the eighth receiver conductor track (1.23, 1.24) are likewise connected to one another in series so that a second overall signal (SU2) can be generated by the seventh and eighth receiver conductor track (1.23, 1.24), wherein
the first overall signal (SU1) and the second overall signal (SU2) have a second phase offset (PH2) relative to one another.

**2.** Inductive angle measuring device according to Claim 1, wherein the first and the second receiver conductor track (1.11, 1.12) run periodically with a constant first period length ($\lambda1$).

**3.** Inductive angle measuring device according to Claim 1 or 2, wherein the fifth, sixth, seventh and eighth receiver conductor track (1.21, 1.22, 1.23, 1.24) run periodically with a constant second period length ($\lambda2$).

**4.** Inductive angle measuring device according to Claim 2 and 3, wherein the second period length ($\lambda2$) is greater than the first period length ($\lambda1$).

**5.** Inductive angle measuring device according to any one of the preceding claims, wherein the first and the second receiver conductor track (1.11, 1.12) run periodically with a constant first period length ($\lambda1$), wherein the first phase offset (PH1) is a quarter of the first period length ($\lambda1$).

**6.** Inductive angle measuring device according to any one of the preceding claims, wherein the fifth, sixth, seventh and eighth receiver conductor track (1.21, 1.22, 1.23, 1.24) run periodically with a constant second period length ($\lambda2$), wherein the second phase offset (PH2) is a quarter of the second period length ($\lambda2$).

**7.** Inductive angle measuring device according to any one of the preceding claims, wherein the first receiver track (1.1) is a first number n1 of receiver conductor tracks (1.11, 1.12, 1.13, 1.14) and the second receiver track (1.2) is a second number n2 of receiver conductor tracks (1.21 to 1.28), wherein n1 is smaller than n2.

**8.** Inductive angle measuring device according to Claim 7, wherein the second number n2 is at least twice as large as the first number n1, i.e. n2 ≥ 2 n1.

9. Inductive angle measuring device according to any one of the preceding claims, wherein the second radius (R2) is smaller than the first radius (R1).

10. Inductive angle measuring device according to any one of the preceding claims, wherein the sensing element (1) comprises a first excitation track (1.3) and a second excitation track (1.4), wherein the first receiver track (1.1) is surrounded radially on the outside by the first excitation track (1.3) and radially inside by the second excitation track (1.4), while the second receiver track (1.2) is only surrounded on one side by the second excitation track (1.4).

11. Inductive angle measuring device according to any one of the preceding claims, wherein the fifth and the sixth receiver conductor track (1.21, 1.22) run periodically with a constant second period length (λ2) and are arranged along the circumferential direction (x) at an angular offset (φ2) from one another, wherein the angular offset (φ2) is a maximum of 1/16 of the second period length λ2, so: φ2 ≤ 1/16·λ2.

12. Inductive angle measuring device according to any one of the preceding claims, wherein the seventh and the eighth receiver conductor track (1.23, 1.24) run periodically with a constant second period length (λ2) and are arranged along the circumferential direction (x) at an angular offset (φ2) from one another, wherein the angular offset (φ2) is a maximum of 1/16 of the second period length λ2, so: φ2 ≤ 1/16·λ2.

13. Inductive angle measuring device according to any one of the preceding claims, wherein the sensing element (1) is in the form of a printed circuit board and the excitation track (1.3, 1.4), the first receiver track (1.1) and the second receiver track (1.2) run in less than four electrically conductive layers.

14. Inductive angle measuring device according to any one of the preceding claims, wherein the first receiver track (1.1) and/or the second receiver track (1.2) extend over the entire circumference.

15. Inductive angle measuring device according to any one of the preceding claims, wherein the sensing element (1) is in the form of a printed circuit board and the excitation track (1.3, 1.4), the first receiver track (1.1) and the second receiver track (1.2) run in exactly two electrically conductive layers.

**Revendications**

1. Dispositif inductif de mesure d'angles comprenant un élément de balayage (1) et un élément gradué (2) apte à tourner par rapport à l'élément de balayage (1), dans lequel

l'élément gradué (2) présente une première piste à divisions (2.1) avec des premières structures de division (2.11, 2.12) agencées à intervalles réguliers et une deuxième piste à divisions (2.2) avec des deuxièmes structures de division (2.21, 2.22) agencées à intervalles réguliers,
l'élément de balayage (1) présente une piste d'excitation (1.3, 1.4) et une première piste de réception (1.1) ainsi qu'une deuxième piste de réception (1.2),
la première piste de réception (1.1) comprenant une première piste conductrice de réception (1.11) et une deuxième piste conductrice de réception (1.12), les première et deuxième pistes conductrices de réception (1.11, 1.12) s'étendant à intervalles réguliers le long d'une première ligne circulaire (K1) avec un premier rayon (R1), les première et deuxième pistes conductrices de réception (1.11, 1.12) étant agencées de manière décalée l'une par rapport à l'autre selon la direction circonférentielle (x), de sorte qu'un premier signal (S1.11) est apte à être généré par la première piste conductrice de réception (1.11) et un deuxième signal (S1.12) est apte à être généré par la deuxième piste conductrice de réception (1.12), le premier signal (S1.11) et le deuxième signal (S1.12) présentant un premier déphasage (PH1) l'un par rapport à l'autre,
la deuxième piste de réception (1.2) comprend une cinquième piste conductrice de réception (1.21), une sixième piste conductrice de réception (1.22), une septième piste conductrice de réception (1.23) et une huitième piste conductrice de réception (1.24), les cinquième, sixième, septième et huitième pistes conductrices de réception (1.21, 1.22, 1.23, 1.24) s'étendant à intervalles réguliers le long d'une deuxième ligne circulaire (K2) avec un deuxième rayon (R2) et étant décalées les unes par rapport aux autres selon la direction circonférentielle (x), **caractérisé en ce que**
les cinquième et sixième pistes conductrices de réception (1.21, 1.22) sont connectées en série de manière à ce qu'un premier signal global (SU1) soit apte à être généré par les cinquième et sixième pistes conductrices de réception (1.21, 1.22), et
les septième et huitième pistes conductrices de réception (1.23, 1.24) sont également connectées en série l'une à l'autre, de sorte qu'un deuxième signal global (SU2) est apte à être généré par les septième et huitième pistes conductrices de réception (1.23, 1.24),

le premier signal global (SU1) et le deuxième signal global (SU2) présentent un deuxième déphasage (PH2) l'un par rapport à l'autre.

2. Dispositif inductif de mesure d'angle selon la revendication 1, dans lequel les première et deuxième pistes conductrices de réception (1.11, 1.12) s'étendent à intervalles réguliers avec une première longueur d'intervalle constante ($\lambda$1).

3. Dispositif inductif de mesure d'angles selon la revendication 1 ou la revendication 2, dans lequel les cinquième, sixième, septième et huitième pistes conductrices de réception (1.21, 1.22, 1.23, 1.24) s'étendent à intervalles réguliers avec une deuxième longueur d'intervalle constante ($\lambda$2).

4. Dispositif inductif de mesure d'angle selon les revendications 2 et 3, la deuxième longueur d'intervalle ($\lambda$2) étant supérieure à la première longueur d'intervalle ($\lambda$1).

5. Dispositif inductif de mesure d'angle selon l'une des revendications précédentes, dans lequel les première et deuxième pistes conductrices de réception (1.11, 1.12) s'étendent à intervalles réguliers avec une première longueur d'intervalle constante ($\lambda$1), le premier déphasage (PH1) étant égal à un quart de la première longueur d'intervalle ($\lambda$1).

6. Dispositif inductif de mesure d'angle selon l'une des revendications précédentes, dans lequel les cinquième, sixième, septième et huitième pistes conductrices de réception (1.21, 1.22, 1.23, 1.24) s'étendent à intervalles réguliers avec une deuxième longueur d'intervalle constante ($\lambda$2), le deuxième déphasage (PH2) étant égal à un quart de la deuxième longueur d'intervalle ($\lambda$2).

7. Dispositif inductif de mesure d'angle selon l'une des revendications précédentes, dans lequel la première piste de réception (1.1) présente un premier nombre n1 de pistes conductrices de réception (1.11, 1.12, 1.13, 1.14) et la deuxième piste de réception (1.2) présente un deuxième nombre n2 de pistes conductrices de réception (1.21 à 1.28), n1 étant inférieur à n2.

8. Dispositif inductif de mesure d'angle selon la revendication 7, dans lequel le deuxième nombre n2 est au moins deux fois plus grand que le premier nombre n1, c'est-à-dire $n2 \geq 2 \cdot n1$.

9. Dispositif inductif de mesure d'angle selon l'une des revendications précédentes, dans lequel le deuxième rayon (R2) est plus petit que le premier rayon (R1).

10. Dispositif inductif de mesure d'angle selon l'une des revendications précédentes, dans lequel l'élément de balayage (1) comprend une première piste d'excitation (1.3) et une deuxième piste d'excitation (1.4), la première piste de réception (1.1) étant entourée radialement à l'extérieur par la première piste d'excitation (1.3) et radialement à l'intérieur par la deuxième piste d'excitation (1.4), tandis que la deuxième piste de réception (1.2) n'est entourée que d'un côté par la deuxième piste d'excitation (1.4).

11. Dispositif de mesure d'angle inductif selon l'une des revendications précédentes, dans lequel les cinquième et sixième pistes conductrices de réception (1.21, 1.22) s'étendent à intervalles réguliers avec une deuxième longueur d'intervalle constante ($\lambda$2) et sont agencées selon la direction circonférentielle (x) avec un décalage angulaire ($\varphi$2) l'une par rapport à l'autre, le décalage angulaire ($\varphi$2) étant au plus égal à 1/16 de la deuxième longueur d'intervalle $\lambda$2, de sorte que $\varphi2 \leq 1/16 \cdot \lambda2$.

12. Dispositif inductif de mesure d'angle selon l'une des revendications précédentes, dans lequel les septième et huitième pistes conductrices de réception (1.23, 1.24) s'étendent à intervalles réguliers avec une deuxième longueur d'intervalle constante ($\lambda$2) et sont décalées l'une par rapport à l'autre selon la direction circonférentielle (x) d'un décalage angulaire ($\varphi$2), le décalage angulaire ($\varphi$2) étant au plus égal à 1/16 de la deuxième longueur d'intervalle $\lambda$2, de sorte que $\varphi2 \leq 1/16 \cdot \lambda2$.

13. Dispositif inductif de mesure d'angle selon l'une des revendications précédentes, dans lequel l'élément de balayage (1) est conçu sous la forme d'une carte à circuit imprimé et la piste d'excitation (1.3, 1.4), la première piste de réception (1.1) ainsi que la deuxième piste de réception (1.2) s'étendent sur moins de quatre couches électriquement conductrices.

14. Dispositif inductif de mesure d'angle selon l'une des revendications précédentes, dans lequel la première piste de réception (1.1) et / ou la deuxième piste de réception (1.2) s'étendent sur toute la circonférence.

15. Dispositif inductif de mesure d'angles selon l'une des revendications précédentes, dans lequel l'élément de balayage (1) est conçu sous la forme d'une carte à circuit imprimé et la piste d'excitation (1.3, 1.4), la première piste de réception (1.1) ainsi que la deuxième piste de réception (1.2) s'étendent exactement dans deux couches électriquement conductrices.

Fig. 1

Fig. 2

## Fig. 3

## Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1715298 B1

- DE 102020205202 A1